# EUROPÄISCHE PATENTSCHRIFT

(11) **EP 3 853 977 B1**
(45) Veröffentlichungstag und Bekanntmachung des Hinweises auf die Patenterteilung: **25.12.2024**
(21) Anmeldenummer: 19758397.4
(22) Anmeldetag: 22.08.2019
(51) Int. Cl.: H02K 5/22, H02K 9/19

(54) **ISOLIERVORRICHTUNG MIT KÜHLMEDIUMLEITUNG**
INSULATING DEVICE WITH COOLING MEDIUM LINE
DISPOSITIF D'ISOLATION AVEC CONDUITE DE FLUIDE DE REFROIDISSEMENT

(30) Priorität: 19.09.2018 DE 102018215889
(43) Veröffentlichungstag der Anmeldung: 28.07.2021
(73) Patentinhaber: Robert Bosch GmbH, 70442 Stuttgart (DE)
(72) Erfinder: ZWEIGLE, Peter, 71254 Ditzingen (DE); BREINLINGER, Philipp, 71642 Ludwigsburg (DE); RIEDL, Johannes, 81369 Muenchen (DE); WURSTER, Heiko, 70771 Leinfelden-Echterdingen (DE)
(86) Internationale Anmeldenummer: PCT/EP2019/072471
(87) Internationale Veröffentlichungsnummer: WO 2020/057891

(56) Entgegenhaltungen:
- EP-B1- 0 642 703
- EP-B1- 1 593 191
- DE-A1- 2 342 753
- DE-B2- 2 342 753
- JP-A- 2013 179 830
- JP-A- H04 265 614
- JP-A- S6 066 637
- KR-A- 20180 010 129
- US-A- 3 808 489
- US-A- 5 814 909
- US-A1- 2014 319 939
- US-A1- 2016 126 808
- US-A1- 2018 026 493

## Beschreibung

### Technisches Gebiet

Die Erfindung bezieht sich auf eine Isoliervorrichtung mit Kühlmediumleitung, die zur Abführung von Verlustwärme eines Stators einer E-Maschine eingesetzt wird.

Des Weiteren bezieht sich die Erfindung auf die Verwendung der Isoliervorrichtung an einer E-Maschine eines mindestens eine E-Maschine aufweisenden Fahrzeugs.

### Stand der Technik

DE 10 2012 021 600 A1 bezieht sich auf einen Elektromotor. Der Elektromotor umfasst ein Gehäuse, mit einem Stator, einem Rotor und einem Drehübertrager. Der Drehübertrager weist eine primärseitige erste Vorrichtung mit einer Primärwicklung und eine sekundärseitige zweite Vorrichtung mit einer Sekundärwicklung auf. Das Gehäuse weist eine erste Aufnahme zur Positionierung der primärseitigen ersten Vorrichtung auf. Die primärseitige erste Vorrichtung umfasst eine Anzahl erster Befestigungsstellen zur kraftschlüssigen und/oder formschlüssigen Befestigung am Gehäuse. Der Rotor umfasst eine zweite Aufnahme zur Positionierung der sekundärseitigen zweiten Vorrichtung, wobei die sekundärseitige zweite Vorrichtung eine Anzahl zweiter Befestigungsstellen zur kraftschlüssigen und/oder formschlüssigen Befestigung an dem Rotor aufweist. Der Rotor enthält eine erste Anschlussvorrichtung und die sekundärseitige zweite Vorrichtung eine zweite Anschlussvorrichtung zur elektrischen Verbindung des Rotors mit der sekundärseitigen zweiten Vorrichtung. Die erste Anschlussvorrichtung weist erste elektrische Kontaktglieder und die zweite Anschlussvorrichtung zweite elektrische Kontaktglieder zur lösbaren Leitungsverbindung mittels Formschluss und/oder Kraftschluss.

DE 10 2015 216 055 A1 bezieht sich auf das Kühlsystem einer elektrischen Maschine. Das Kühlsystem umfasst mindestens einen Lagerschild und wenigstens eine Kühlmittelverteilerplatte, wobei der Lagerschild und die Kühlmittelverteilerplatte dazu eingerichtet sind, gemeinsam einen Kühlkanal auszubilden. Der Kühlkanal umfasst mehrere horizontale Kühlkanalabschnitte, welche parallel zu einer Drehachse der elektrischen Maschine verlaufen. Ferner umfasst der Kühlkanal mehrere vertikale Kühlkanalabschnitte, welche senkrecht zur Drehachse der elektrischen Maschine verlaufen. Ferner sind mehrere radial verlaufende Kühlkanalabschnitte vorgesehen, welche sich um die Drehachse der elektrischen Maschine herum erstrecken.

DE 11 2012 002 552 T5 bezieht sich auf einen Elektromotor. Der Elektromotor umfasst eine Welle, die mit einem Rotor versehen ist, darin ausgebildet einen Kühlmitteldurchtrittsweg, so dass ein Kühlmedium hindurchströmen kann. Des Weiteren ist ein Gehäuse vorgesehen, in dem die Welle vorgesehen ist, wobei die Welle drehbar gelagert ist. Es ist ein Kühlmediumzufuhrabschnitt vorgesehen, der innerhalb des Gehäuses an einer Seite von einem Ende der Welle verläuft und das Kühlmedium zu dem inneren Kühlmediumsdurchtrittsweg führt. Es ist des Weiteren ein Drehwinkelerfassungssensor vorgesehen, der an der Seite des einen Endes der Welle angebracht ist und einen Drehwinkel der Welle erfasst.

US 2018 002 6493 A1 bezieht sich auf ein Gehäuse für einen elektrischen Motor. Ein Gehäuse für einen elektrischen Motor umfasst einen Gehäusekörper, der einen inneren Teil und einen äußeren Teil umfasst, die zusammen einen Kühlmediumpfad bilden, der sich in axiale Richtung des Gehäusekörpers erstreckt. Ein von der äußeren Oberfläche des äußeren Gehäuseteils hervorstehender Leistungskomponentenabschnitt ist derart ausgebildet, dass die Leistungskomponente vom Kühlmedium gekühlt wird. Gehäuseabdeckungen sind an beiden Endabschnitten des Gehäusekörpers angeordnet, so dass die elektrische Maschine und die Leistungskomponente gleichzeitig über den einen Kühlfluidströmungspfad gekühlt werden. Dadurch kann ein separates Leistungskomponentengehäuse zur Anordnung der Leistungskomponente vermieden werden, wodurch sich die Größe und das Gewicht des Gehäuses verringern lassen.

US 3,808,489 bezieht sich auf eine gekühlte Abdeckung eines Generatoranschlussabschnitts. Der Anschlussabschnitt für Hochvoltanschlüsse einer dynamoelektrischen Maschine ist mit speziellen Ableitern versehen, um eine Überhitzung der Anschlussbereichswände durch zirkulierende Ströme zu vermeiden, die von den Hochvoltanschlüssen ausgehen. Die Abschirmungen und der Anschlussbereich werden über ein Gas gekühlt, welches durch geeignete Kanäle zwischen diesen strömt.

US 5,814,909 bezieht sich auf einen elektrischen Motor, der einen Wärmeabstrahler an einer elektrischen Verbindung zu einem Inverter umfasst. Die Spulen des elektrischen Motors sind mit einer Leistungselektronik eines Inverters elektrisch verbunden. Ein Leitungsabschnitt, der den Motorspulen einen Fahrstrom zur Verfügung stellt, umfasst einen ersten Wärmestrahlungsbereich oder ein anderes Wärmestrahlungselement innerhalb des Leitungspfades. Auf diese Weise wird die von dem elektrischen Motor erzeugte Wärme vom Leitungsabschnitt in den Leitungspfad geleitet. Die Leistungseinrichtung und andere Komponenten des Inverters können dadurch vor thermisch bedingten Schäden geschützt werden oder vor Verwitterungserscheinungen, welche durch die Wärme hervorgerufen werden, die die Motorspulen erzeugen und die dem Inverter durch den Leitungsabschnitt zugeleitet wird, der eine höhere Wärmeleitfähigkeit aufweist.

JP 04 265 614 A bezieht sich auf eine Phasenisolation mit einer erzwungenen Luftkühlung.

Die beispielsweise an Elektroantriebsachsen verwendeten (Drehstrom-) E-Maschinen benötigen zum Betrieb einen elektrischen Anschluss der Statorphasen. Wenn weitere Entfernungen bis zur Ansteuerelektronik überwunden werden müssen, werden die Phasenströme über Kupferstromschienen geführt. Diese Stromschienen haben einen relativ großen Querschnitt, um den Ohmschen Widerstand und die Erwärmung möglichst gering zu halten. Um die erforderlichen Luft- und Kriechstrecken einzuhalten, sind die Stromschienen in einem Isolierstück aus Kunststoff gehalten.

Zur Abführung der Verlustwärme ist der Stator der E-Maschine häufig wassergekühlt. Das Kühlwasser wird zum Beispiel im Bereich des Lagerschildes zu- und abgeführt. Zwischen diesen Anschlussstellen wird das Kühlwasser zur Wärmeaufnahme im Maschinengehäuse geführt. Da die Verbindung der internen Kühlwasserführung und der gewünschten Anschlussrichtung der Kühlwasserschläuche oft ungünstig gekrümmte Zuleitungsbereiche erfordern, die gusstechnisch nur sehr aufwendig herzustellen sind, werden sie in der Regel mit aufgesteckten Rohren aus Kunststoff oder Metall gebildet.

### Darstellung der Erfindung

Erfindungsgemäß wird eine Isoliervorrichtung mit integrierten Kühlmediumkanälen vorgeschlagen, die einen Isolierkörper aus einem Kunststoffmaterial umfasst, in dem Stromschienen aufgenommen sind. Die Kühlmediumkanäle sind in das Kunststoffmaterial des Kühlkörpers integriert. Durch die erfindungsgemäß vorgeschlagene Lösung kann in vorteilhafter Weise eine ansonsten aufwendig herzustellende Kühlwasserführung, insbesondere bei der Herstellung als Gussbauteile vermieden werden. Durch die erfindungsgemäß vorgeschlagene Lösung kann in vorteilhafter Weise eine Senkung des Temperaturniveaus der Stromschienen an der Isoliervorrichtung erreicht werden.

Die Isoliervorrichtung kann entweder in einteiliger Ausführung oder in einer mehrteiligen Ausführung ausgebildet werden.

Die integrierten Kühlmediumkanäle sind im Bereich der Stirnseite des Isolierkörpers der erfindungsgemäß vorgeschlagenen Isoliervorrichtung angespritzt. Das Anspritzen der Kühlmediumkanäle aus dem Kunststoffmaterial, aus dem der Isolierkörper gefertigt wird, kann in fertigungstechnisch besonders einfacher Weise im Rahmen des Spritzgussverfahrens eines Kunststoffmaterials hergestellt werden.

In vorteilhafter Weise verlaufen die Kühlmediumkanäle am Isolierkörper der Isoliervorrichtung derart, dass diese sich im Wesentlichen in vertikale Richtung erstrecken.

Durch die erfindungsgemäß vorgeschlagene Lösung können in vorteilhafter Weise die Stromschienen, die in den Isolierkörper eingelassen sind, voneinander isoliert werden und Rohrbögen, in denen das Kühlmedium strömt, in den Isolierkörper der Isoliervorrichtung integriert werden.

Der Isolierkörper der erfindungsgemäß vorgeschlagenen Isoliervorrichtung ist aus einem elektrisch isolierenden, aber auf möglichst gute Wärmeleitung optimierten Kunststoffmaterial hergestellt. Dabei handelt es sich beispielsweise um ein Kunststoffmaterial wie beispielsweise Luvocom 1-8259 oder Tecacomp PA 66 TC 3923. Durch die erfindungsgemäß vorgeschlagene Lösung kann in vorteilhafter Weise die Herstellung komplizierter Kühlmediumkanäle durch Formkerne oder sich schneidende Bohrungen vermieden werden, ohne dass zusätzliche Bauteile wie beispielsweise separate Anschlussstutzen und dergleichen benötigt würden. Durch die erfindungsgemäß vorgeschlagene Lösung kann eine besonders platzsparende und einfache Kühlung der Stromschienen erreicht werden, so dass der Ohmsche Widerstand und die Erwärmung derselben bei großen Lasten möglichst gering bleibt.

Die erfindungsgemäß vorgeschlagene Isoliervorrichtung kann entweder in einer einteiligen Ausführung oder einer mehrteiligen Ausführung ausgebildet sein. Im Falle einer mehrteiligen Ausbildung können beispielsweise die einzelnen Teile des Isolierkörpers aus voneinander verschiedenen Kunststoffmaterialien gefertigt werden. Es besteht andererseits auch die Möglichkeit, die beiden Teile einer mehrteiligen Ausführung des Isolierkörpers aus ein und demselben Kunststoffmaterial zu fertigen. Die Teile des Isolierkörpers - im Falle einer mehrteiligen Ausführung - liegen entlang einer Trennfuge aneinander an, wobei in einem ersten Teil des Isolierkörpers bei mehrteiliger Ausführung beispielsweise zwei Stromschienen angeordnet sind und in einem zu diesem komplementär ausgebildeten zweiten Teil des Isolierkörpers lediglich eine Stromschiene angeordnet ist, oder auch umgekehrt.

Im Falle einer einteiligen Ausführung des Isolierkörpers der erfindungsgemäß vorgeschlagenen Isoliervorrichtung kann dieser in vorteilhafter Weise aus einem Material gefertigt werden, wobei insbesondere die integrierten Kühlmediumkanäle an der Stirnseite der Isoliervorrichtung angespritzt werden.

Anstelle von in Flachbauweise ausgebildeten, aus Blech gestanzten oder anderweitig geformten Stromschienen, können auch Drähte in verschiedenen Ausführungen verwendet werden. Beispielsweise kann ein Massivdraht mit rundem oder anderem Querschnitt Verwendung finden, des Weiteren geschlagene oder geflochtene Litzen. Beim Einsatz derart ausgebildeter Stromschienen ist die entsprechende Aufnahmegeometrie im Material des Isolierkörpers komplementär zur Geometrie der jeweils eingesetzten Stromschiene ausgebildet. Die thermische Ankopplung der Leiter an die Kunststoffoberfläche des Isolierkörpers kann durch Wärmeleitpaste verbessert werden, was sowohl für den Einsatz von Stromschienen in Flachbauweise als auch für den Einsatz von Stromschienen in Drahtform - wie oben dargelegt - gilt.

Die Erfindung bezieht sich des Weiteren auf die Verwendung der Isoliervorrichtung mit integrierten Kühlmediumkanälen zur Kühlung einer E-Maschine eines mindestens eine E-Maschine aufweisenden Fahrzeugs, sei es ein elektrisches Fahrzeug (EV = Electric Vehicle), sei es ein Hybrid Electric Vehicle (HEV) oder sei es ein Plug-in-Hybrid Electric Vehicle (PHEV). In vorteilhafter Weise kann beispielsweise bei dem Einsatz der erfindungsgemäß vorgeschlagenen Lösung bei Hybrid-Elektrofahrzeugen der Kühlmediumkreislauf der Verbrennungskraftmaschine gleichzeitig auch zur Kühlung der mindestens einen E-Maschine eines Hybrid-Elektrofahrzeugs genutzt werden, ohne dass ein separater Kühlmediumkreislauf bei einem Hybrid-Elektrofahrzeug erforderlich wäre.

### Vorteile der Erfindung

Die erfindungsgemäß vorgeschlagene Lösung bietet in vorteilhafter Weise eine Möglichkeit, die Fertigung von Gehäuseteilen für E-Maschinen zu vereinfachen, da durch die erfindungsgemäß vorgeschlagene Lösung eine Herstellung komplizierter Kühlmediumkanäle durch Formkerne an Gussteilen oder sich schneidende Bohrungen an Gussteilen vermieden werden kann, ohne dass zusätzliche Bauteile wie beispielsweise separate Anschlussstutzen oder dergleichen benötigt würden. Durch die erfindungsgemäß vorgeschlagene Lösung lassen sich die im Isolierkörper der Isoliervorrichtung geführten Stromschienen sehr einfach und effizient kühlen und auf einem den Ohmschen Widerstand in vorteilhafter Weise begünstigenden niedrigen Temperaturwert halten. Durch die erfindungsgemäß vorgeschlagene Lösung kann hinsichtlich der Kühlmediumführung eine erhebliche Verringerung eines ansonsten zu betreibenden Aufwandes erreicht werden. Durch die erfindungsgemäß vorgeschlagene Isoliervorrichtung mit integrierten Kühlmediumkanälen kann eine Senkung des Temperaturniveaus im Bereich der Stromschienen am Isolierkörper erreicht werden; ferner lässt sich durch die erfindungsgemäß vorgeschlagene Lösung insbesondere eine effiziente und zuverlässige elektrische Isolierung der Stromschienen voneinander erreichen. Im Gegensatz zu bisher eingesetzten Lösungen bei der Verwendung von Rohrbögen und dergleichen, die nachträglich zu isolieren sind, kann durch die erfindungsgemäß vorgeschlagene Lösung die Bauteilanzahl verringert werden, Dichtungen eingespart und insbesondere eine leckagefreie Kühlmediumführung sichergestellt werden.

Die erfindungsgemäß vorgeschlagene Lösung zeichnet sich durch eine Gewichtsersparnis aus, verglichen mit einer Lösung, bei der die gesamte Kanalführung in einem aus Aluminium gefertigten Lagerschild verläuft und dieses entsprechend größer zu dimensionieren ist.

### Kurze Beschreibung der Zeichnungen

Anhand der Zeichnung wird die Erfindung nachstehend eingehender beschrieben.

Es zeigt:
- Figur 1: eine perspektivische Ansicht eines E-Achsenmoduls mit einem Lagerschild für eine elektrische Maschine und einer Leistungselektronik,
- Figur 2: eine perspektivische Draufsicht auf ein bisher eingesetztes Isolierstück samt Stromschienen,
- Figur 3: eine Ansicht eines in Figur 1 verbauten Rohrbogens,
- Figur 4: eine erste einteilige Ausführungsform der erfindungsgemäß vorgeschlagenen Isoliervorrichtung mit an der Stirnseite integrierten Kühlmediumkanälen,
- Figur 5: eine mehrteilige Ausführungsvariante der erfindungsgemäß vorgeschlagenen Isoliervorrichtung mit integrierten Kühlmediumkanälen und
- Figur 6: einen ersten Teil der in Figur 5 in mehrteiliger Ausführungsform dargestellten erfindungsgemäßen Isoliervorrichtung.

### Ausführungsvarianten

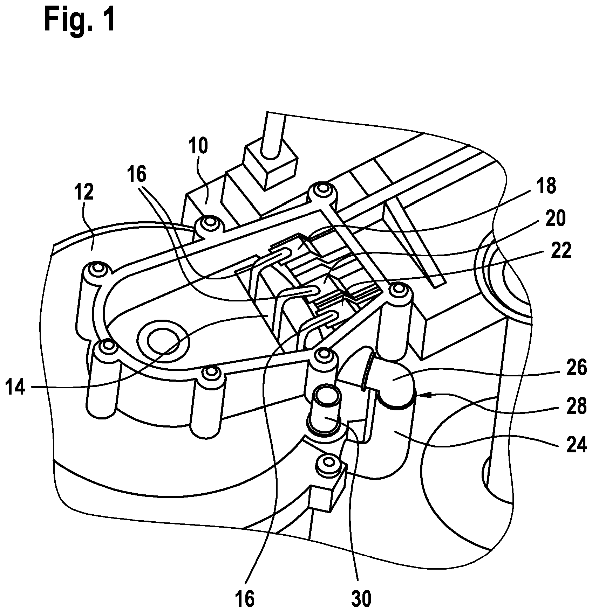

Der Darstellung in Figur 1 ist eine perspektivische Ansicht eines E-Achsenmoduls zu entnehmen.

Die Darstellung gemäß Figur 1 stellt eine seitlich perspektivische Ansicht eines E-Achsenmoduls dar, wobei insbesondere ein Lagerschild 12 eines Gehäuses dargestellt ist. Oberhalb des Lagerschildes 12, der eine E-Maschine 14 größtenteils verdeckt, ist ein Teil einer Leistungselektronik 10 dargestellt. An der Leistungselektronik 10 sind in Figur 1 nicht dargestellte elektrische Anschlüsse aufgenommen, über welche die in Figur 1 nicht dargestellte E-Maschine 14 mit Strom versorgt wird. Von der E-Maschine 14 erstrecken sich Phasenanschlüsse 16 jeweils zu einer ersten Stromschiene18, einer zweiten Stromschiene 20 sowie einer dritten Stromschiene 22.

Des Weiteren lässt sich der perspektivischen Ansicht gemäß Figur 1 entnehmen, dass eine Kühlmediumführung 24 einen Rohrbogen 26 umfasst. Bei diesem handelt es sich beispielsweise um einen Zulauf 28 für ein Kühlmedium, während der in Figur 1 ebenfalls in perspektivischer Ansicht dargestellte Rücklauf 30 der Rückführung des Kühlmediums dient.

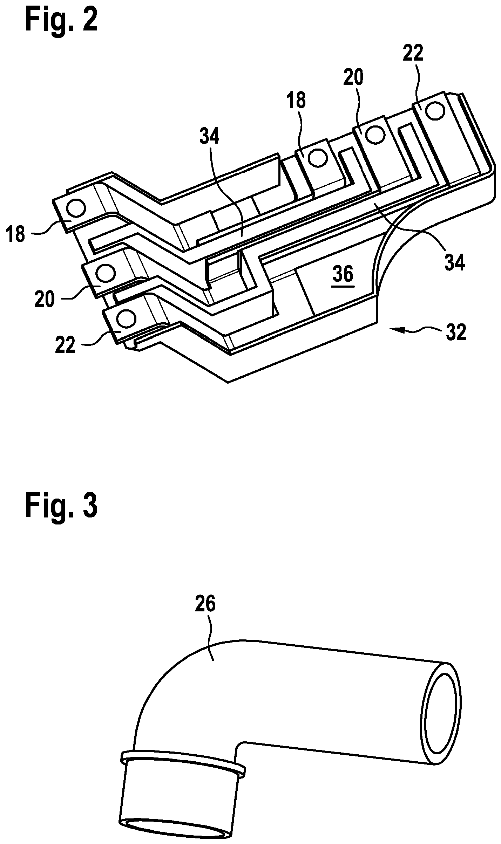

Figur 2 zeigt in perspektivischer Darstellung ein Isolierstück 32. Das Isolierstück ist von einer Umrandung umschlossen und umfasst einzelne Isolierstege 34, durch welchen die erste Stromschiene 18 von der zweiten Stromschiene 20 und die zweite Stromschiene 20 von der dritten Stromschiene 22 getrennt sind. Das Isolierstück 32 weist eine Isolierstück-Wanne 36 auf, die von der Umrandung umschlossen ist. Durch die sich durch das Isolierstück 32 erstreckenden Isolierstücke 34 erfolgt eine Isolation der ersten Stromschiene 18, der zweiten Stromschiene 20 sowie der dritten Stromschiene 22 voneinander.

Figur 3 zeigt eine perspektivische Ansicht eines Rohrbogens 26, der beispielsweise aus einem metallischen Material gefertigt ist und der Kühlmedium zum Lagerschild 12, an dem die E-Maschine aufgenommen ist, leitet.

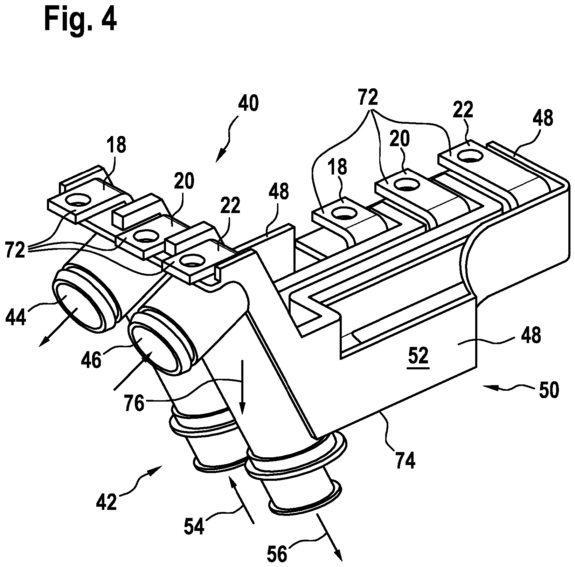

Figur 4 zeigt eine erste Ausführungsvariante der erfindungsgemäß vorgeschlagenen Isoliervorrichtung mit integrierten Kühlmediumkanälen.

Aus der Darstellung gemäß Figur 4 geht hervor, dass ein Isolierkörper 74, in dem die erste Stromschiene 18, die zweite Stromschiene 20 sowie die dritte Stromschiene 22 gegeneinander isoliert aufgenommen sind, beispielsweise aus einem ersten Kunststoffmaterial 52 gefertigt ist. In der Darstellung gemäß Figur 4 handelt es sich um einen Isolierkörper 74, der aus einem ersten Kunststoffmaterial 52 hergestellt ist. Bevorzugt kommt bei der Herstellung des Isolierkörpers 74 aus fertigungstechnischen Gründen hinsichtlich des ersten Kanals 44 sowie des zweiten Kanals 46 das Kunststoffspritzgießverfahren infrage. Bei dem ersten Kunststoffmaterial 52 handelt es sich beispielsweise um ein elektrisch isolierendes und auf möglichst gute Wärmeleitung hin optimiertes Kunststoffmaterial, wie zum Beispiel Luvocom 1-8259 oder Tecacomp PA 66 TC 3923.

Aus der Darstellung gemäß Figur 4 geht hervor, dass der Isolierkörper 74 der Isoliervorrichtung 40 in einer einteiligen Ausführung 50 ausgebildet ist. Bevorzugt wird der Isolierkörper 74 im Rahmen des Kunststoffspritzgießverfahrens in einem Arbeitsgang gefertigt. Beim Kunststoffspritzgießen können auch die von einer Umrandung 48 umgebenen jeweiligen Isolierstege 34 gefertigt werden. Durch die Isolierstege 34, die das Innere des Isolierkörpers 74 durchziehen, sind die erste Stromschiene 18 von der zweiten Stromschiene 20 sowie die zweite Stromschiene 20 von der dritten Stromschiene 22 elektrisch isoliert. Die erste, zweite und dritte Stromschienen 18, 20, 22 umfassen jeweils Anschlussbereiche 72, die beispielsweise mit einer kreisrunden Öffnung oder dergleichen versehen sein können.

Aus Figur 4 ergibt sich des Weiteren, dass der erste Kanal 44 und der zweite Kanal 46 sich im Wesentlichen in vertikale Richtung 76 an der Stirnseite 42 des Isolierkörpers 74 erstrecken. Bevorzugt wird eine Zuströmung 54 in den Bereich gelegt, in dem mehr Wärme abzuführen ist, weil dort beispielsweise mehrere Stromschienen 18, 20, 22 angeordnet sind bzw. die dort angeordneten Stromschienen 18, 20 und 22 länger sind, da bei diesen durch die niedrige Kühlmitteltemperatur die Wirksamkeit größer ist.

Die erste Stromschiene 18, die zweite Stromschiene 20 sowie die dritte Stromschiene 22 sind derart geformt, dass diese sowohl eben in Bezug auf den Boden des Isolierkörpers 74 verlaufende Abschnitte als auch um 90° verdreht zu diesen, hochkant verlaufende Abschnitte aufweisen.

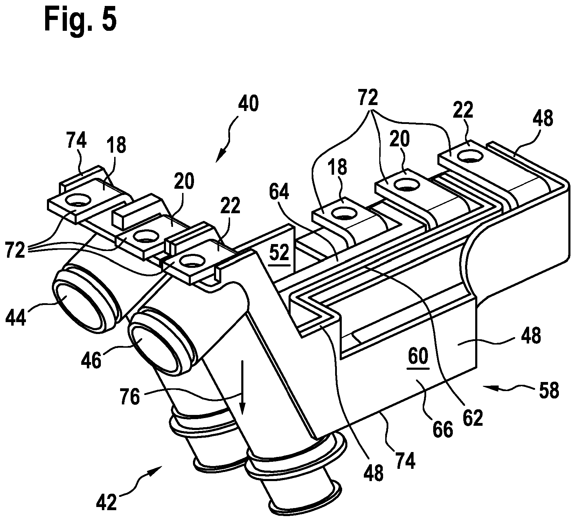

Der Darstellung gemäß Figur 5 ist eine perspektivische Draufsicht auf einen Isolierkörper 74 zu entnehmen, der in einer mehrteiligen Ausführung 59 beschaffen ist. Darunter ist zu verstehen, dass in der mehrteiligen Ausführung 58 die erfindungsgemäß vorgeschlagene Isoliervorrichtung 40 einen ersten Teil 64 sowie einen zweiten Teil 66 umfasst. Während im Ausführungsbeispiel gemäß Figur 5 der erste Teil 64, die erste Stromschiene 18 und die zweite Stromschiene 20 aufnimmt, ist im zweiten Teil 66 lediglich die dritte Stromschiene 22 untergebracht. An der Orientierung der Anschlussbereiche 72 der Stromschienen 18, 20 und 22 ändert sich in der Ausführungsvariante als mehrteilige Ausführung 58 gemäß Figur 5 im Vergleich zur einteiligen Ausführung 50 gemäß Figur 4 nichts. Während beispielsweise der erste Teil 64 des Isolierkörpers 74 aus dem ersten Kunststoffmaterial 52 spritzgegossen ist, könnte der zweite Teil 66 des Isolierkörpers 74 gemäß der Darstellung in Figur 5 aus einem davon verschiedenen, zweiten Kunststoffmaterial 60 spritzgegossen werden. Beiden Teilen, dem ersten Teil 64 und dem zweiten Teil 66 ist gemeinsam, dass an deren parallel zueinander verlaufenden Stirnseiten 42 der erste Kanal 44 bzw. der zweite Kanal 46 angespritzt ist. In Bezug auf den ersten Teil 64 befindet sich an der Stirnseite 42 der erste Kanal 44. Der zweite Teil 66 der Isoliervorrichtung 40 nimmt an seiner Stirnseite 42 hingegen den zweiten Kanal 46 auf. Analog zur Darstellung gemäß Figur 4, d.h. zur einteiligen Ausführung 50, verlaufen die beiden Kanäle 44, 46 an dem ersten Teil 64 und dem zweiten Teil 66 ebenfalls im Wesentlichen in vertikale Richtung 76 an der Stirnseite 42 der beiden entlang einer Trennfuge 62 aneinander liegenden Teile 64 und 66.

Bei der in Figur 5 dargestellten Ausführungsvariante des Isolierkörpers 74 der Isoliervorrichtung 40 in mehrteiliger Ausführung 58 kann das Spritzgusswerkzeug, in welchem das erste Kunststoffmaterial 52 bzw. das zweite Kunststoffmaterial 60 verarbeitet werden, einfacher ausgelegt werden. Des Weiteren lassen sich bei der in Figur 5 dargestellten mehrteiligen Ausführung 58 Leckagetoleranzen vereinfachen, wenn der Isolierkörper 74 zweiteilig mit jeweils an dem ersten Teil 64 vorgesehenen ersten Kanal 44 und an dem zweiten Teil 66 vorgesehenen zweiten Kanal 46 ausgeführt ist.

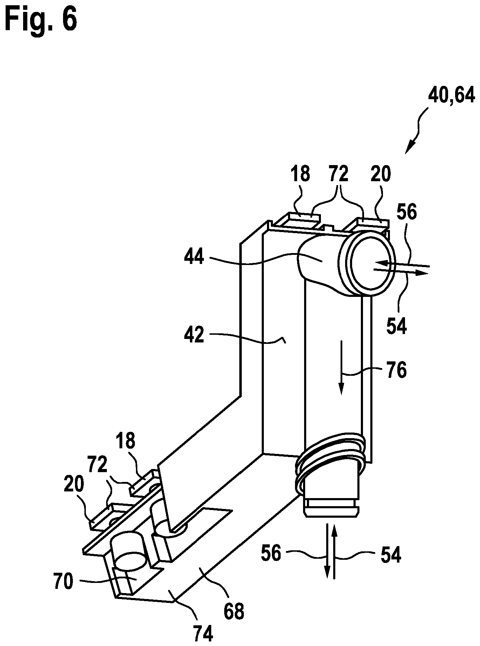

Der Darstellung gemäß Figur 6 ist ein erster Teil 64 des Isolierkörpers 74 in mehrteiliger Ausführung zu entnehmen.

Wie aus der perspektivischen Ansicht des ersten Teiles 64 des Isolierkörpers 74 gemäß Figur 6 hervorgeht, verläuft an dessen Stirnseite 42 der erste Kanal 44 im Wesentlichen in vertikale Richtung 76. Der erste Kanal 44, wie er in Figur 6 dargestellt ist, kann sowohl von einer Zuströmung 54 als auch von einer Abströmung 56 eines Kühlmediums durchströmt werden. Die Zuströmung 54 liegt bevorzugt in dem Bereich, in dem mehr Wärme anfällt, wenn zum Beispiel dort mehrere Stromschienen 18, 20, 22 angeordnet sind und diese länger ausgeführt sind.

Der in Figur 6 in perspektivischer Ansicht dargestellte erste Teil 64 des Isolierkörpers 74, nimmt die erste Stromschiene 18 bzw. die zweite Stromschiene 20 auf, die durch einen in Figur 5 dargestellten Isoliersteg 34 elektrisch gegeneinander isoliert sind. Die erste Stromschiene 18 bzw. die zweite Stromschiene 20 weisen an ihren Enden jeweils die Anschlussbereiche 72 auf. Ein Bodenabschnitt des ersten Teiles 64 der Isoliervorrichtung 40 ist in der Darstellung gemäß Figur 6 mit Bezugszeichen 68 identifiziert. Der erste Teil 64 umfasst eine Ausnehmung 70, damit die Phasenanschlüsse 16, vergleiche Darstellung gemäß Figur 1, der E-Maschine 14 leichter mit den Anschlussbereichen 72 der ersten Stromschiene 18 und der zweiten Stromschiene 20 verbunden werden können.

Die Stromschienen 18, 20 und 22 sind in den Darstellungen gemäß der Figuren 4 und 5 sowie 6 teilweise in der Regel als eingelegte Teile in den jeweiligen Isolierkörper 74 bzw. in den ersten Teil 64 und dessen zweiten Teil 66 eingelassen. Zur Verbesserung des Wärmeübergangs kann zusätzlich eine Wärmeleitpaste vorgesehen werden. Des Weiteren besteht die Möglichkeit, die in den Figuren 4, 5 und 6 dargestellten Stromschienen 18, 20 und 22 in das jeweilige Kunststoffmaterial 52 bzw. 60 des Isolierkörpers 74 bzw. in dessen Teile 64 und 66 einzuspritzen, um auf diese Weise den Wärmeübergang zu verbessern. Zur Kostenersparnis besteht weiterhin die Möglichkeit, den Isolierkörper 74 der Isoliervorrichtung 40 mit integrierten Kühlmediumkanälen 44, 46 auch mittels eines Vorumspritzlings herzustellen oder das Mehrkomponentenspritzgießverfahren einzusetzen. Dadurch kann das Innere beispielsweise des Isolierkörpers 74 aus einem preiswerteren Kunststoffmaterial gefertigt werden, und das teurere die besonderen Relationseigenschaften aufweisende erste Kunststoffmaterial 52 bzw. das zweite Kunststoffmaterial 60 nur an den Bereichen eingesetzt werden, wo dies unbedingt erforderlich ist.

Die vorstehend beschriebenen Stromschienen 18, 20 und 22 können alternativ zu ihrer flachen Ausbildung auch als Drähte beschaffen sein, so zum Beispiel als Massivdrähte mit rundem oder anderem Querschnitt, als geschlagene Litzen oder auch als geflochtene Litzen. Werden derartige Geometrien für die Stromschienen 18, 20, 22 gewählt, ist die Aufnahmegeometrie in den Isolierkörper 74 dementsprechend nicht flach, sondern beispielsweise halbrund, in jedem Fall komplementär zur Geometrie der nicht in Flachbauweise ausgebildeten Stromschienen 18, 20 und 22. Des Weiteren kann Wärmeleitpaste eingesetzt werden, um die thermische Ankopplung der Stromschienen 18, 20, 22 - seien sie in Flachbauweise, seien sie als Drähte ausgeführt - an das Kunststoffmaterial des Isolierkörpers 74 zu verbessern.

Die Erfindung ist nicht auf die hier beschriebenen Ausführungsbeispiele und die darin hervorgehobenen Aspekte beschränkt.

## Patentansprüche

1. Isoliervorrichtung (40) mit integrierten Kühlmediumkanälen (44, 46) für die Abführung von Verlustwärme eines Stators einer E-Maschine mit einem Isolierkörper (74) mit einem Kunststoffmaterial (52, 60), in dem Stromschienen (18, 20, 22) aufgenommen sind, wobei die Kühlmediumkanäle (44, 46) in das Kunststoffmaterial (52, 60) des Isolierkörpers (74) integriert sind und der Isolierkörper in einteiliger Ausführung (50) oder in mehrteiliger Ausführung (58) ausgebildet ist, **dadurch gekennzeichnet, dass** die Kühlmediumkanäle (44, 46) im Bereich einer Stirnseite (42) des Isolierkörpers (74) angespritzt sind.

2. Isoliervorrichtung (40) gemäß Anspruch 1, **dadurch gekennzeichnet, dass** die Kühlmediumkanäle (44, 46) sich im Wesentlichen in vertikale Richtung (76) erstrecken.

3. Isoliervorrichtung (40) gemäß Anspruch 1, **dadurch gekennzeichnet, dass** das erste Kunststoffmaterial (52) ein elektrisch isolierendes und auf möglichst gute Wärmeleitung hin optimiertes Kunststoffmaterial ist, wie Luvocom 1-8259 oder Tecacomp PA 66 TC 3923.

4. Isoliervorrichtung (40) gemäß Anspruch 1, **dadurch gekennzeichnet, dass** die mehrteilige Ausführung (58) des Isolierkörpers (74) einen ersten Teil (64) und einen zweiten Teil (66) aufweist.

5. Isoliervorrichtung (40) gemäß Anspruch 4, **dadurch gekennzeichnet, dass** im ersten Teil (64) die erste Stromschiene (18) und die zweite Stromschiene (20) aufgenommen sind und der zweite Teil (66) die dritte Stromschiene (22) aufnimmt.

6. Isoliervorrichtung (40) gemäß Anspruch 4, **dadurch gekennzeichnet, dass** der erste Teil (64) und der zweite Teil (66) aus dem ersten Kunststoffmaterial (52) gefertigt sind,
oder der erste Teil (64) und der zweite Teil (66) aus dem zweiten Kunststoffmaterial (60) gefertigt sind,
oder der erste Teil (64) aus dem ersten Kunststoffmaterial (52) und der zweite Teil (66) aus dem zweiten Kunststoffmaterial (60) gefertigt sind und umgekehrt.

7. Isoliervorrichtung (40) gemäß Anspruch 1, **dadurch gekennzeichnet, dass** der Isolierkörper (74) in der einteiligen Ausführung (50) Isolierstege (34) aufweist, die die Stromschienen (18, 20, 22) voneinander trennen.

8. Isoliervorrichtung (40) gemäß Anspruch 1, **dadurch gekennzeichnet, dass** die Teile (64, 66) des Isolierkörpers (74) jeweils Isolierstege (34) aufweisen, die die Stromschienen (18, 20, 22) gegeneinander isolieren.

9. Isoliervorrichtung (40) gemäß Anspruch 1, **dadurch gekennzeichnet, dass** der Isolierkörper (74) eine Wärmeleitpaste aufnimmt, in die die Stromschienen (18, 20, 22) eingebettet sind.

10. Isoliervorrichtung (40) gemäß Anspruch 1, **dadurch gekennzeichnet, dass** die Stromschienen (18, 20, 22) in das Kunststoffmaterial (52, 60) des Isolierkörpers (74) eingespritzt sind.

11. Isoliervorrichtung (40) gemäß Anspruch 1, **dadurch gekennzeichnet, dass** der Isolierkörper (74) einen Vorumspritzling umfasst, oder in Mehrkomponententechnik gefertigt ist und das wärmeleitende Kunststoffmaterial nur in den Bereichen gespritzt ist, in denen es vonnöten ist.

12. Verwendung der Isoliervorrichtung (40) mit integrierten Kühlmediumkanälen (44, 46) gemäß einem der Ansprüche 1 bis 11 zur elektrischen Kontaktierung und zur Kühlung einer E-Maschine (14) eines Elektrofahrzeugs (EV = Electric Vehicle), eines Hybrid-Elektrofahrzeugs (HEV = Hybrid Electric Vehicle) oder eines Plug-in-Hybrid Electric Vehicle (PHEV).

## Claims

1. Insulating device (40) with integrated cooling-medium channels (44, 46) for dissipating heat loss of a stator of an electric machine, having an insulating body (74) with a plastic material (52, 60) in which busbars (18, 20, 22) are received, wherein the cooling-medium channels (44, 46) are integrated in the plastic material (52, 60) of the insulating body (74) and the insulating body is formed in a single-part embodiment (50) or in a multi-part embodiment (58), **characterized in that** the cooling-medium channels (44, 46) are injection-moulded in the region of an end face (42) of the insulating body (74).

2. Insulating device (40) according to Claim 1, **characterized in that** the cooling-medium channels (44, 46) extend substantially in the vertical direction (76).

3. Insulating device (40) according to Claim 1, **characterized in that** the first plastic material (52) is an electrically insulating plastic material optimized for the best possible heat conduction, such as Luvocom 1-8259 or Tecacomp PA 66 TC 3923.

4. Insulating device (40) according to Claim 1, **characterized in that** the multi-part embodiment (58) of the insulating body (74) has a first part (64) and a second part (66).

5. Insulating device (40) according to Claim 4, **characterized in that** the first busbar (18) and the second busbar (20) are received in the first part (64), and the second part (66) receives the third busbar (22).

6. Insulating device (40) according to Claim 4, **characterized in that** the first part (64) and the second part (66) are manufactured from the first plastic material (52),
or the first part (64) and the second part (66) are manufactured from the second plastic material (60),
or the first part (64) is manufactured from the first plastic material (52) and the second part (66) is manufactured from the second plastic material (60) and vice versa.

7. Insulating device (40) according to Claim 1, **characterized in that** the insulating body (74) in the single-part embodiment (50) has insulating webs (34) which separate the busbars (18, 20, 22) from one another.

8. Insulating device (40) according to Claim 1, **characterized in that** the parts (64, 66) of the insulating body (74) each have insulating webs (34) which insulate the busbars (18, 20, 22) with respect to one another.

9. Insulating device (40) according to Claim 1, **characterized in that** the insulating body (74) receives a heat-conducting paste in which the busbars (18, 20, 22) are embedded.

10. Insulating device (40) according to Claim 1, **characterized in that** the busbars (18, 20, 22) are injected into the plastic material (52, 60) of the insulating body (74).

11. Insulating device (40) according to Claim 1, **characterized in that** the insulating body (74) comprises a pre-injection-moulded part or is manufactured in a multi-component technique and the heat-conducting plastic material is only injected into the regions in which it is necessary.

12. Use of the insulating device (40) with integrated cooling-medium channels (44, 46) according to one of Claims 1 to 11 for electrical contacting and for cooling an electric machine (14) of an electric vehicle (EV), a hybrid electric vehicle (HEV) or a plug-in hybrid electric vehicle (PHEV).

## Revendications

1. Dispositif d'isolation (40) à canaux de fluide de refroidissement (44, 46) intégrés pour l'évacuation de la chaleur dissipée d'un stator d'une machine électrique, comprenant un corps isolant (74) avec une matière plastique (52, 60) dans laquelle sont logés des rails conducteurs (18, 20, 22), dans lequel les canaux de fluide de refroidissement (44, 46) sont intégrés dans la matière plastique (52, 60) du corps isolant (74), et le corps isolant est réalisé dans une version (50) en une partie et dans une version (58) en plusieurs parties, **caractérisé en ce que** les canaux de fluide de refroidissement (44, 46) sont rapportés par moulage dans la zone d'une face frontale (42) du corps isolant (74).

2. Dispositif d'isolation (40) selon la revendication 1, **caractérisé en ce que** les canaux de fluide de refroidissement (44, 46) s'étendent substantiellement dans la direction verticale (76).

3. Dispositif d'isolation (40) selon la revendication 1, **caractérisé en ce que** la première matière plastique (52) est une matière plastique électriquement isolante et optimisée pour une conduction thermique optimale, telle que le Luvocom 1-8259 ou le Tecacomp PA 66 TC 3923.

4. Dispositif d'isolation (40) selon la revendication 1, **caractérisé en ce que** la version en plusieurs parties (58) du corps isolant (74) présente une première partie (64) et une deuxième partie (66).

5. Dispositif d'isolation (40) selon la revendication 4, **caractérisé en ce que** la première partie (64) loge le premier rail conducteur (18) et le deuxième rail conducteur (20), et la deuxième partie (66) loge le troisième rail conducteur (22).

6. Dispositif d'isolation (40) selon la revendication 4, **caractérisé en ce que** la première partie (64) et la deuxième partie (66) sont fabriquées à partir de la première matière plastique (52),
ou la première partie (64) et la deuxième partie (66) sont fabriquées à partir de la deuxième matière plastique (60),
ou la première partie (64) est fabriquée à partir de la première matière plastique (52) et la deuxième partie (66) est fabriquée à partir de la deuxième matière plastique (60) et inversement.

7. Dispositif d'isolation (40) selon la revendication 1, **caractérisé en ce que** le corps isolant (74) dans la version en une seule partie (50) présente des nervures d'isolation (34) qui séparent les rails conducteurs (18, 20, 22) les uns des autres.

8. Dispositif d'isolation (40) selon la revendication 1, **caractérisé en ce que** les parties (64, 66) du corps isolant (74) présentent respectivement des nervures d'isolation (34) qui isolent les rails conducteurs (18, 20, 22) les uns par rapport aux autres.

9. Dispositif d'isolation (40) selon la revendication 1, **caractérisé en ce que** le corps isolant (74) reçoit une pâte thermoconductrice dans laquelle sont incorporés les rails conducteurs (18, 20, 22).

10. Dispositif d'isolation (40) selon la revendication 1, **caractérisé en ce que** les rails conducteurs (18, 20, 22) sont injectés dans la matière plastique (52, 60) du corps isolant (74).

11. Dispositif d'isolation (40) selon la revendication 1, **caractérisé en ce que** le corps isolant (74) comprend un surmoulage préliminaire ou est fabriqué selon une technique multicomposants, et la matière plastique thermoconductrice n'est injectée que dans les zones où elle est nécessaire.

12. Utilisation du dispositif d'isolation (40) à canaux de fluide de refroidissement (44, 46) intégrés selon l'une quelconque des revendications 1 à 11 pour la mise en contact électrique et pour le refroidissement d'une machine électrique (14) d'un véhicule électrique (EV = « electric vehicle »), d'un véhicule électrique hybride (HEV = « hybrid electric vehicle ») ou d'un véhicule électrique hybride rechargeable (PHEV = « plug-in hybrid electric vehicle »).
